# FASCICULE DE BREVET EUROPEEN

(11) **EP 4 532 235 B1**
(45) Date de publication et mention de la délivrance du brevet: **22.04.2026**
(21) Numéro de dépôt: 23727878.3
(22) Date de dépôt: 09.05.2023
(51) Int. Cl.: B60K 1/04

(54) **VEHICULE ELECTRIQUE OU HYBRIDE COMPORTANT UN STOCKEUR D'ENERGIE ELECTRIQUE IMPLANTE SOUS UN PLANCHER DUDIT VEHICULE**
ELEKTRO- ODER HYBRIDFAHRZEUG MIT EINEM UNTERHALB DES BODENS DES FAHRZEUGS INSTALLIERTEN ELEKTRISCHEN ENERGIESPEICHER
ELECTRIC OR HYBRID VEHICLE COMPRISING AN ELECTRICAL ENERGY STORE INSTALLED BELOW A FLOOR OF THE VEHICLE

(30) Priorité: 02.06.2022 FR 2205331
(43) Date de publication de la demande: 09.04.2025
(73) Titulaire: Stellantis Auto SAS, 78300 Poissy (FR)
(72) Inventeur: ROUSSEAU, Xavier, 91220 BRETIGNY (FR); TIXIER, Julien, 78460 CHEVREUSE (FR); CHOMETTON, Stéphane, 78800 HOUILLES (FR)
(74) Mandataire: PSIP
(86) Numéro de dépôt international: PCT/FR2023/000086
(87) Numéro de publication internationale: WO 2023/233084

(56) Documents cités:
- EP-A1- 2 685 548
- US-A1- 2016 355 100
- US-A1- 2018 111 483

## Description

L'invention se rapporte à un véhicule électrique ou hybride comportant un stockeur d'énergie électrique implanté sous un plancher dudit véhicule.

Les véhicules électriques et hybrides nécessitent l'implantation de nombreux modules de stockage d'énergie électrique, qui occupent un volume important pour assurer une autonomie suffisante au véhicule.

De façon traditionnelle, ces modules de stockage d'énergie électrique sont positionnés sous le plancher du véhicule, notamment sous les sièges avant du véhicule et sous les sièges arrière du véhicule, ainsi que dans la console centrale, ou encore dans le coffre du véhicule. L'habitabilité s'en trouve ainsi diminuée de façon conséquente par l'implantation de ces modules de stockage d'énergie électrique.

De façon à augmenter l'habitabilité, Il est par exemple connu du document US-B2-8464817 un véhicule comportant, sous le plancher, un premier ensemble de modules de stockage d'énergie électrique situé sous les sièges avant du véhicule et un deuxième ensemble de modules de stockage d'énergie électrique disposé, quant à lui, sous les sièges arrière du véhicule. Entre les sièges avant et les sièges arrière, autrement dit au niveau de l'emplacement prévu pour les pieds des passagers assis sur les sièges arrière, est positionnée la partie électronique des modules de stockage d'énergie électrique. La face supérieure de la partie électronique est disposée en deçà de la face supérieure des modules de stockage d'énergie électrique.

Le volume de cette partie électronique n'est toutefois pas optimisé et occupe malgré tout un espace conséquent nuisant au confort des passagers assis sur les sièges arrière du véhicule.

En outre, l'état de la technique est connu du document US2016355100A1.

Le but de l'invention est de pallier les inconvénients de l'art antérieur en proposant un véhicule électrique ou hybride muni d'un stockeur d'énergie électrique implanté sous le plancher permettant d'optimiser le confort des passagers assis sur les sièges arrière du véhicule.

Dans ce contexte, l'invention se rapporte ainsi, dans son acceptation la plus large, à un véhicule électrique ou hybride comportant un stockeur d'énergie électrique implanté sous un plancher du véhicule, le stockeur d'énergie électrique comportant :
- Un premier ensemble de modules de stockage d'énergie électrique disposé sous une rangée de sièges avant du véhicule,
- Un deuxième ensemble de modules de stockage d'énergie électrique disposé sous une rangée de sièges arrière du véhicule, et
- Une partie électronique disposée entre les premier et deuxième ensembles de modules de stockage d'énergie électrique au niveau de l'emplacement prévu pour des pieds de passager assis sur la rangée de sièges arrière du véhicule.

Le stockeur d'énergie électrique est remarquable en ce que la partie électronique comporte une face supérieure inclinée disposée en regard du plancher du véhicule, la face supérieure inclinée comportant un point haut positionné au niveau de la rangée de sièges avant et un point bas positionné au niveau de la rangée de sièges arrière du véhicule, le plancher épousant la forme de ladite face supérieure inclinée.

Grâce au stockeur d'énergie électrique selon cet aspect de l'invention, et plus particulièrement à la face supérieure inclinée de la partie électronique, l'espace occupé par la partie électronique est adapté au confort des passagers assis sur les sièges arrière du véhicule. L'inclinaison de la face supérieure de la partie électronique, permet de proposer un plancher épousant la forme de celle-ci, et donc d'augmenter l'espace disponible pour les pieds des passagers assis sur les sièges arrière et d'améliorer la posture squelettique des passagers.

Outre les caractéristiques qui viennent d'être évoquées dans le paragraphe précédent, le véhicule selon l'invention peut présenter une ou plusieurs caractéristiques complémentaires parmi les suivantes, considérées individuellement ou selon toutes les combinaisons techniquement possibles.

Selon un aspect non limitatif de l'invention, la partie électronique est formée d'au moins deux blocs disposés côte à côte selon un axe longitudinal de la partie électronique.

Selon un aspect non limitatif de l'invention, la face supérieure forme avec une face inférieure de la partie électronique un angle compris entre 5° et 30°.

Selon un aspect non limitatif de l'invention, la partie électronique présente une section transversale triangulaire, la section transversale triangulaire étant perpendiculaire à un axe longitudinal de la partie électronique.

Selon un aspect non limitatif de l'invention, la section transversale triangulaire forme un triangle rectangle dont la face supérieure forme l'hypoténuse du triangle rectangle.

Selon un aspect non limitatif de l'invention, la section transversale triangulaire forme un triangle obtusangle dont la face supérieure forme le côté le plus long du triangle obtusangle.

Selon un aspect non limitatif de l'invention, la section transversale triangulaire forme un triangle isocèle.

Selon un aspect non limitatif de l'invention, la section transversale triangulaire forme un triangle scalène.

L'invention et ses différentes applications seront mieux comprises à la lecture de la description qui suit et à l'examen des figures qui l'accompagnent.
[Fig. 1] illustre, de façon schématique, un exemple de réalisation d'un véhicule selon l'invention muni d'un stockeur d'énergie électrique implanté sous le plancher du véhicule.
[Fig. 2] représente, de façon schématique, un autre exemple de réalisation d'un véhicule selon l'invention muni d'un stockeur d'énergie électrique implanté sous le plancher du véhicule.
[Fig. 3] représente, de façon schématique, un exemple différent de réalisation d'un véhicule selon l'invention muni d'un stockeur d'énergie électrique implanté sous le plancher du véhicule.
[Fig. 4] représente, de façon schématique, un exemple différent de réalisation d'un véhicule selon l'invention muni d'un stockeur d'énergie électrique implanté sous le plancher du véhicule.
[Fig. 5] représente, de façon schématique, un exemple de réalisation d'un stockeur d'énergie électrique équipant un véhicule selon un aspect non limitatif de l'invention.

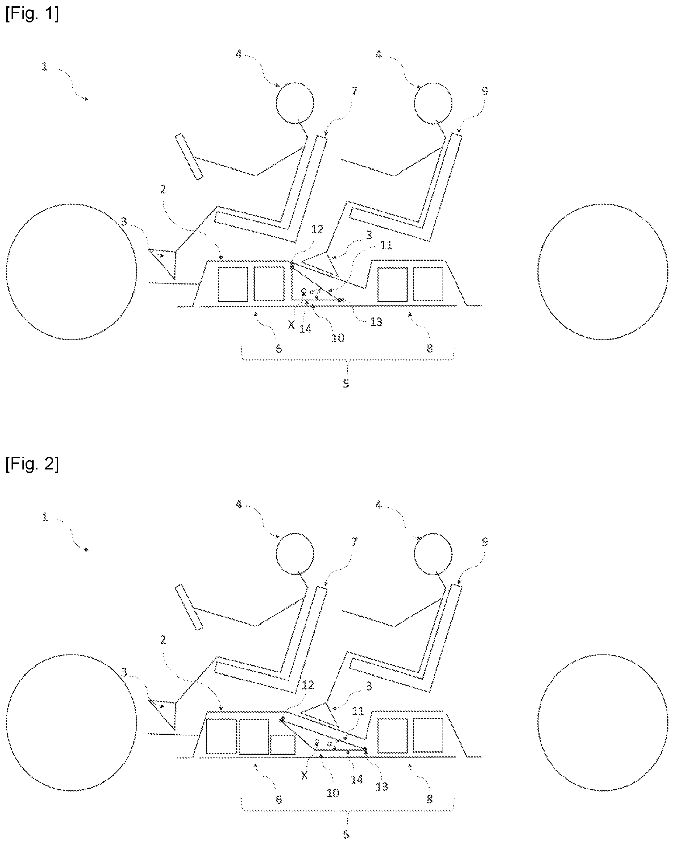

La figure 1 illustre un exemple de réalisation d'un véhicule 1 selon un aspect de l'invention.

Le véhicule 1 est muni d'un plancher 2 pour la pose des pieds 3 de passagers 4. Le véhicule 1 peut être un véhicule électrique ou un véhicule hybride.

Le véhicule 1 comporte, sous le plancher 2, un stockeur d'énergie électrique 5. De façon non limitative, le stockeur d'énergie électrique 5 peut présenter une tension de type 48V ou de type 400V. Il permet notamment d'alimenter électriquement des machines électriques de traction (non illustrées) que comporte le véhicule 1.

Le stockeur d'énergie électrique 5 comporte un premier ensemble 6 de modules de stockage d'énergie électrique. Seulement deux modules sont illustrés, mais il est entendu qu'un nombre différent de modules de stockage d'énergie électrique peut être employé. Le premier ensemble 6 de modules de stockage d'énergie électrique est disposé sous une rangée de sièges avant 7 du véhicule 1. Cet emplacement situé sous la rangée de sièges avant 7 permet de ne pas impacter l'espace disponible pour les pieds 3 des passagers 4 avant.

Le stockeur d'énergie électrique 5 comporte également un deuxième ensemble 8 de modules de stockage d'énergie électrique. Seulement deux modules sont illustrés, mais il est entendu qu'un nombre différent de modules de stockage d'énergie électrique peut être employé Ce deuxième ensemble 8 de modules de stockage d'énergie électrique est disposé sous une rangée de sièges arrière 9 du véhicule 1. Cet emplacement situé sous la rangée de sièges arrière 9 permet de ne pas impacter l'espace disponible pour les passagers 4 arrière.

Le stockeur d'énergie électrique 5 comporte en outre une partie électronique 10, notamment une partie électronique de puissance, disposée entre le premier ensemble 6 et le deuxième ensemble 8 de modules de stockage d'énergie électrique. La partie électronique 10 du stockeur d'énergie électrique 5 est placée au niveau de l'emplacement prévu pour les pieds 3 des passagers 4 arrière du véhicule 1.

Cette partie électronique 10 est remarquable en ce qu'elle comporte une face supérieure 11 inclinée. Cette face supérieure 11 inclinée est disposée en regard du plancher 2 du véhicule 1.

La face supérieure 11 inclinée comporte un point haut 12 positionné au niveau de la rangée de sièges avant 7 et un point bas 13 disposé au niveau de la rangée de sièges arrière 9 du véhicule 1.

Par exemple, la face supérieure 11 inclinée de la partie électronique 10 forme, avec une face inférieure 14 de la partie électronique 10, un angle ∝ compris entre 5° et 30°.

Il convient en outre de noter que le plancher 2 épouse la forme de la partie électronique 10. On entend par épouser le fait que le plancher 2 présente une inclinaison au niveau de la partie électronique 10. Cette inclinaison peut être similaire à celle de la partie électronique 10 ou plus atténuée.

Ainsi, les passagers 4 assis sur la rangée de sièges 9 arrière du véhicule 1 ont les pieds 3 légèrement inclinés. La forme spécifique de la partie électronique 10 permet d'offrir un espace suffisant aux passagers 4 arrière du véhicule 1 et offre une posture squelettique optimale à ces derniers. Le confort des passagers 4 arrière est ainsi amélioré.

Dans cet exemple de réalisation non limitatif, la partie électronique 10 présente une section transversale triangulaire, la section transversale triangulaire étant perpendiculaire à un axe longitudinal X de la partie électronique 10. Plus particulièrement, dans cet exemple de réalisation illustré à la figure 1, la section transversale triangulaire forme un triangle rectangle dont la face supérieure 11 forme l'hypoténuse du triangle rectangle.

Dans un exemple de réalisation non limitatif différent illustré à la figure 2, la partie électronique 10 présente une section transversale triangulaire formant un triangle obtusangle. La face supérieure 11 forme le côté le plus long du triangle obtusangle.

Dans cet exemple de réalisation, le premier ensemble 6 de modules de stockage d'énergie électrique comporte trois modules de stockage d'énergie électrique et le deuxième ensemble 8 de modules de stockage d'énergie électrique comporte deux modules de stockage d'énergie électrique.

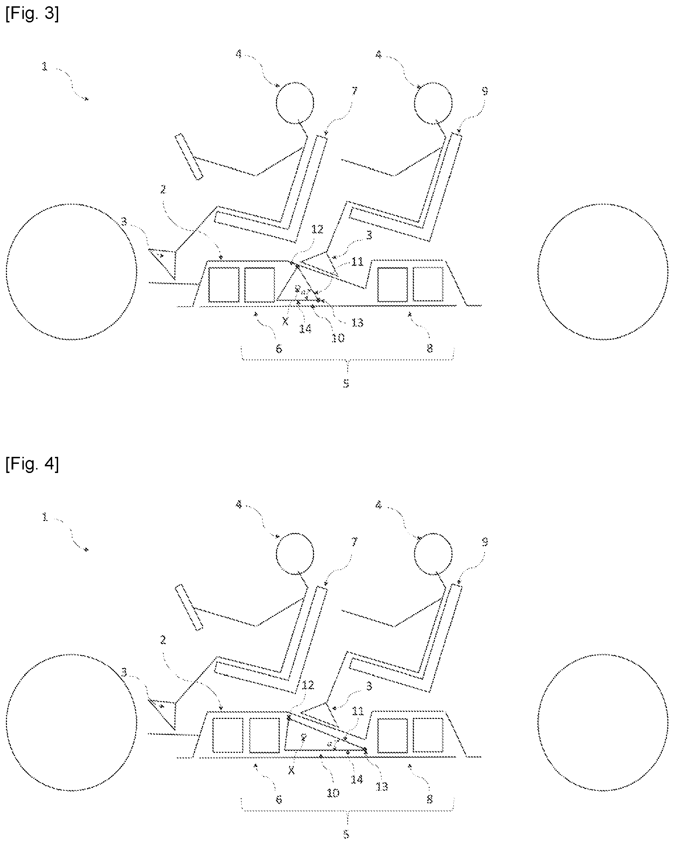

Dans un autre exemple de réalisation non limitatif illustré à la figure 3, la partie électronique 10 présente une section transversale triangulaire formant un triangle isocèle.

Dans un exemple différent de réalisation non limitatif illustré à la figure 4, la partie électronique 10 présente une section transversale triangulaire formant un triangle scalène.

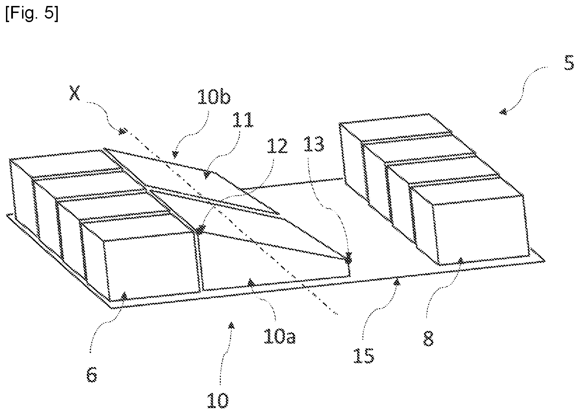

La figure 5 illustre un autre mode de réalisation d'un stockeur d'énergie électrique 5 pouvant être implanté sous le plancher 2 d'un véhicule 1 électrique ou hybride selon l'invention.

Dans cet exemple de réalisation, le stockeur d'énergie électrique 5 comporte un premier ensemble 6 de modules de stockage d'énergie électrique. Dans cet exemple de réalisation non limitatif, quatre modules sont illustrés, mais il est entendu qu'un nombre différent de modules de stockage d'énergie électrique peut être employé. Le premier ensemble 6 de modules de stockage d'énergie électrique est agencé pour être disposé sous une rangée de sièges avant 7 du véhicule 1.

Le stockeur d'énergie électrique 5 comporte également un deuxième ensemble 8 de modules de stockage d'énergie électrique. Dans cet exemple de réalisation non limitatif, quatre modules sont illustrés, mais il est entendu qu'un nombre différent de modules de stockage d'énergie électrique peut être employé Ce deuxième ensemble 8 de modules de stockage d'énergie électrique est agencé pour être disposé sous une rangée de sièges arrière 9 du véhicule 1.

Le stockeur d'énergie électrique 5 comporte en outre une partie électronique 10, notamment une partie électronique de puissance, disposée entre le premier ensemble 6 et le deuxième ensemble 8 de modules de stockage d'énergie électrique. La partie électronique de puissance 10 du stockeur d'énergie électrique 5 est agencée pour être placée au niveau de l'emplacement prévu pour le positionnement des pieds 3 des passagers 4 arrière du véhicule 1.

Cette partie électronique de puissance 10 est remarquable en ce qu'elle comporte une face supérieure 11 inclinée. Cette face supérieure 11 inclinée est agencée pour être disposée en regard du plancher 2 du véhicule 1.

La face supérieure 11 inclinée comporte un point haut 12 agencé pour être positionné au niveau de la rangée de sièges avant 7 et un point bas 13 agencé pour être disposé au niveau de la rangée de sièges arrière 9 du véhicule 1.

Dans cet exemple de réalisation non limitatif, la partie électronique de puissance 10 est formée de deux blocs 10a, 10b disposés côte à côte selon l'axe longitudinal X de la partie électronique de puissance 10.

Le stockeur d'énergie électrique 5 est positionné sur un capot de protection 15. Ce capot de protection 15 est destiné à protéger le stockeur d'énergie électrique 5 de l'environnement extérieur.

Les différents aspects de l'invention susmentionnés présentent de nombreux avantages. Parmi ceux-ci, on peut citer :
- Un volume réduit occupé par le stockeur d'énergie électrique 5, et plus particulièrement par la partie électronique 10 dudit stockeur d'énergie électrique 5, et
- Une optimisation de la posture squelettique des passagers 4 arrière d'un véhicule 1 équipé d'un tel stockeur d'énergie électrique 5.

Il convient de noter que l'homme du métier est en mesure d'apporter différentes variantes aux aspects de l'invention précités, par exemple en modifiant la section de la partie électronique et/ou en modifiant le nombre de blocs constituant la partie électronique 10 et/ou en modifiant le nombre de modules de stockage d'énergie électrique. Par conséquent, diverses modifications sont possibles, mais uniquement dans le cadre de l'invention telle que définie par les revendications annexées.

## Revendications

1. Véhicule (1) électrique ou hybride comportant un stockeur d'énergie électrique (5) implanté sous un plancher (2) dudit véhicule (1), ledit stockeur d'énergie électrique (5) comportant
- Un premier ensemble (6) de modules de stockage d'énergie électrique disposé sous une rangée de sièges avant (7) dudit véhicule (1),
- Un deuxième ensemble (8) de modules de stockage d'énergie électrique disposé sous une rangée de sièges arrière (9) dudit véhicule (1), et
- Une partie électronique (10) disposée entre les premier et deuxième ensembles (6, 8) de modules de stockage d'énergie électrique au niveau de l'emplacement prévu pour des pieds (3) de passagers (4) assis sur ladite rangée de sièges arrière (9) dudit véhicule (1),
- Ledit stockeur d'énergie électrique (5) étant **caractérisé en ce que**, ladite partie électronique (10) comporte une face supérieure (11) inclinée disposée en regard dudit plancher (2), ladite face supérieure (11) inclinée comportant un point haut (12) positionné au niveau de ladite rangée de sièges avant (7) et un point bas positionné au niveau de ladite rangée de sièges arrière (9), ledit plancher (2) épousant la forme de ladite face supérieure (11) inclinée.

2. Véhicule (1) selon la revendication 1 **caractérisé en ce que** la partie électronique (10) est formée d'au moins deux blocs (10a, 10b) disposés côte à côte selon un axe longitudinal (X) de la partie électronique (10).

3. Véhicule (1) selon l'une quelconque des revendications 1 ou 2, **caractérisé en ce que** la face supérieure (11) forme avec une face inférieure (14) de la partie électronique (10) un angle (∝) compris entre 5° et 30°.

4. Véhicule (1) selon l'une quelconque des revendications 1 à 3, **caractérisé en ce que** la partie électronique (10) présente une section transversale triangulaire, ladite section transversale triangulaire étant perpendiculaire à un axe longitudinal (X) de la partie électronique (10).

5. Véhicule (1) selon la revendication 4, **caractérisé en ce que** la section transversale triangulaire forme un triangle rectangle dont la face supérieure (11) forme l'hypoténuse dudit triangle rectangle.

6. Véhicule (1) selon la revendication 4, **caractérisé en ce que** la section transversale triangulaire forme un triangle obtusangle dont la face supérieure (11) forme le côté le plus long dudit triangle obtusangle.

7. Véhicule (1) selon la revendication 4, **caractérisé en ce que** la section transversale triangulaire forme un triangle isocèle.

8. Véhicule (1) selon la revendication 4, **caractérisé en ce que** la section transversale triangulaire forme un triangle scalène.

## Patentansprüche

1. Elektro- oder Hybridfahrzeug (1) mit einem elektrischen Energiespeicher (5), der unter einem Boden (2) des Fahrzeugs (1) angeordnet ist, wobei der elektrische Energiespeicher (5) umfasst
- Eine erste Gruppe (6) von elektrischen Energiespeichermodulen, die unter einer Reihe von Vordersitzen (7) des Fahrzeugs (1) angeordnet sind,
- Eine zweite Gruppe (8) von elektrischen Energiespeichermodulen, die unter einer Reihe von Rücksitzen (9) des Fahrzeugs (1) angeordnet sind, und
- Einen elektronischen Teil (10), der zwischen der ersten und der zweiten Gruppe (6, 8) von elektrischen Energiespeichermodulen an der für die Füße (3) von auf der genannten Rücksitzreihe (9) des Fahrzeugs (1) sitzenden Passagieren (4) vorgesehenen Stelle angeordnet ist,
- Wobei der elektrische Energiespeicher (5) **dadurch gekennzeichnet ist, dass** der elektronische Teil (10) eine geneigte obere Fläche (11) aufweist, die dem Boden (2) zugewandt ist, wobei die geneigte obere Fläche (11) einen Hochpunkt (12) auf Höhe der genannten Vordersitzreihe (7) und einen Tiefpunkt auf Höhe der genannten Rücksitzreihe (9) aufweist, wobei sich der Boden (2) der Form der genannten geneigten oberen Fläche (11) anpasst.

2. Fahrzeug (1) nach Anspruch 1, **dadurch gekennzeichnet, dass** der elektronische Teil (10) aus mindestens zwei Blöcken (10a, 10b) besteht, die entlang einer Längsachse (X) des elektronischen Teils (10) nebeneinander angeordnet sind.

3. Fahrzeug (1) nach einem der Ansprüche 1 oder 2, **dadurch gekennzeichnet, dass** die obere Fläche (11) mit einer unteren Fläche (14) des elektronischen Teils (10) einen Winkel bildet, der zwischen 5° und 30° liegt.

4. Fahrzeug (1) nach einem der Ansprüche 1 bis 3, **dadurch gekennzeichnet, dass** der elektronische Teil (10) einen dreieckigen Querschnitt aufweist, wobei der dreieckige Querschnitt senkrecht zu einer Längsachse (X) des elektronischen Teils (10) verläuft.

5. Fahrzeug (1) nach Anspruch 4, **dadurch gekennzeichnet, dass** der dreieckige Querschnitt ein rechtwinkliges Dreieck bildet, dessen obere Fläche (11) die Hypotenuse des rechtwinkligen Dreiecks bildet.

6. Fahrzeug (1) nach Anspruch 4, **dadurch gekennzeichnet, dass** der dreieckige Querschnitt ein stumpfwinkliges Dreieck bildet, dessen obere Fläche (11) die längste Seite des stumpfwinkligen Dreiecks bildet.

7. Fahrzeug (1) nach Anspruch 4, **dadurch gekennzeichnet, dass** der dreieckige Querschnitt ein gleichschenkliges Dreieck bildet.

8. Fahrzeug (1) nach Anspruch 4, **dadurch gekennzeichnet, dass** der dreieckige Querschnitt ein ungleichseitiges Dreieck bildet.

## Claims

1. Electric or hybrid vehicle (1) comprising an electrical energy storage device (5) arranged under a floor (2) of said vehicle (1), said electrical energy storage device (5) comprising
- A first set (6) of electrical energy storage modules arranged under a row of front seats (7) of said vehicle (1),
- A second set (8) of electrical energy storage modules arranged under a row of rear seats (9) of said vehicle (1), and
- An electronic portion (10) arranged between the first and second sets (6, 8) of electrical energy storage modules at the location provided for the feet (3) of passengers (4) seated on said row of rear seats (9) of said vehicle (1),
- Said electrical energy storage device (5) being **characterized in that** said electronic portion (10) comprises an inclined upper face (11) disposed facing said floor (2), said inclined upper face (11) comprising a high point (12) positioned at the level of said row of front seats (7) and a low point positioned at the level of said row of rear seats (9), said floor (2) conforming to the shape of said inclined upper face (11).

2. Vehicle (1) according to claim 1, **characterized in that** the electronic portion (10) is formed by at least two blocks (10a, 10b) arranged side by side along a longitudinal axis (X) of the electronic portion (10).

3. Vehicle (1) according to any one of claims 1 or 2, **characterized in that** the upper face (11) forms with a lower face (14) of the electronic portion (10) an angle comprised between 5° and 30°.

4. Vehicle (1) according to any one of claims 1 to 3, **characterized in that** the electronic portion (10) has a triangular cross-section, said triangular cross-section being perpendicular to a longitudinal axis (X) of the electronic portion (10).

5. Vehicle (1) according to claim 4, **characterized in that** the triangular cross-section forms a right triangle whose upper face (11) forms the hypotenuse of said right triangle.

6. Vehicle (1) according to claim 4, **characterized in that** the triangular cross-section forms an obtuse triangle whose upper face (11) forms the longest side of said obtuse triangle.

7. Vehicle (1) according to claim 4, **characterized in that** the triangular cross-section forms an isosceles triangle.

8. Vehicle (1) according to claim 4, **characterized in that** the triangular cross-section forms a scalene triangle.
